# EUROPÄISCHE PATENTANMELDUNG

(11) **EP 2 012 142 A1**
(43) Veröffentlichungstag der Anmeldung: **07.01.2009**
(21) Anmeldenummer: 07013162.8
(22) Anmeldetag: 05.07.2007
(51) Int. Cl.: G01V 3/10

(54) **Magnetometersonde und Magnetometer**

(71) Anmelder: Vallon GmbH, 72800 Eningen (DE)
(72) Erfinder: Reinhardt, Horst, 72800 Eningen (DE)
(74) Vertreter: Klocke, Peter

(57) **Zusammenfassung**

Die Erfindung betrifft eine Magnetometersonde (1), mit einem Sondenrohr (13), in dem ein oder mehrere Induktoren (2) zusammen mit einer Sondenelektronik (3) angeordnet sind, wobei die Sondenelektronik (3) die Induktoren (2) ansteuert und ein veränderliches kontinuierliches elektrisches Analogsignal der Induktoren (2) verstärkt. Zur Vermeidung von Veränderungen des analogen Messsignals während der Übertragung zu einer abgesetzten, in großer Distanz vorgesehenen Anzeige- und/oder Auswerteeinheit schlägt die Erfindung vor, das Messsignal in digitalisierter Form zu übertragen. Dazu formt die Sondenelektronik (3) ein kontinuierliches Digitalsignal aus dem Analogsignal, und überträgt das Digitalsigna in Form einer Folge von digitalisierten Messwerten über einen digitalen Kommunikations- oder Treiberbaustein an eine entfernte Auswerte- und/oder Anzeigeeinheit.

## Beschreibung

Die Erfindung betrifft eine Magnetometersonde, mit einem Sondenrohr, in dem ein oder mehrere Induktoren zusammen mit einer Sondenelektronik angeordnet sind, wobei die Sondenelektronik die Induktoren ansteuert und ein veränderliches kontinuierliches elektrisches Analogsignal der Induktoren verstärkt.

Magnetometer sind an sich bekannt. Eine Magnetometersonde der eingangs genannten Art ist in der EP 0 590 349 B1 offenbart und wird u. a. zum Auffinden von Gegenständen im Erdboden eingesetzt, die das natürliche Erdmagnetfeld beeinflussen. Solche Magnetometersonden können auch für die geophysikalische Magnetfeldvermessungen eingesetzt werden. Abhängig von dem Verwendungszweck sind in dem Sondenrohr ein oder mehrere Induktoren angeordnet, wobei Magnetometer mit einem Induktor eine Absolutfeldmessung und Magnetometer mit mehr als einem Induktor eine Differenzfeldmessung ermöglichen.

Magnetometer werden auch als Eisensuchgeräte bezeichnet. Sie bestehen im Normalfall aus einer Magnetometersonde und einer abgesetzten Auswerteelektronik mit entsprechender Anzeigeeinheit, die das Messsignal der Induktoren auswertet und optisch und/oder akustisch zur Anzeige bringt. Zur Ansteuerung der Induktoren und zur Verstärkung des analogen Messsignals ist in dem Sondenrohr eine Sondenelektronik vorgesehen. Das verstärkte analoge Messsignal, meist eine Gleichspannung mit wechselnder Polarität und Größe, wird an die Auswerteelektronik per Kabelverbindung weitergeleitet.

Magnetometer können ferromagnetische Störkörper im Boden oder im Wasser in Abhängigkeit von der Größe und dem magnetischen Zustand in sehr großen Tiefen lokalisieren. Bei der Suche in größeren Tiefen, beispielsweise in Gewässern oder in Bohrlöchern, ist zwischen dem Sondenrohr und der Auswerteelektronik eine lange Kabelverbindung notwendig. Durch die lange Verbindungsleitung können analoge Messsignale gedämpft und/oder durch äußere Einwirkungen verfälscht werden. Für die computergeschützte Auswertung und Speicherung der Messsignale ist es außerdem erforderlich, die anlogen Messsignale zu digitalisieren. Dies geschieht bei bekannten Magnetometern in der abgesetzten Auswerteelektronik oder in externen Datenwandlungssystemen.

Der Erfindung liegt die Aufgabe zugrunde, eine Magnetometersonde vorzuschlagen, deren Messsignale unverändert über größere Distanzen an eine abgesetzte Auswerteelektronik übertragbar sind.

Diese Aufgabe wird erfindungsgemäß durch eine Magnetometersonde mit den Merkmalen des Anspruchs 1 gelöst. Weitere vorteilhafte Ausgestaltungen sind den Unteransprüchen zu entnehmen.

Die erfindungsgemäße Magnetometersonde weist eine Sondenelektronik auf, die ein kontinuierliches Digitalsignal aus dem Analogsignal der Induktoren formt. Das kontinuierliche Digitalsignal, das aus einer Folge von digitalisierten Messwerten besteht, überträgt ein digitaler Kommunikations- oder Treiberbaustein der Sondenelektronik an eine entfernte Anzeige- und/oder Auswerteeinheit.

Durch die Änderung der Sondenelektronik können Magnetometer mit einer derartigen Magnetometersonde für die computergestützte Datenverarbeitung wesentlich vereinfacht eingesetzt werden. Die vorgeschlagene Magnetometersonde oder die zugeordnete Anzeige- und/oder Auswerteeinheit kann direkt an einen Personal Computer oder dergleichen zur Datenspeicherung und Datenaufbereitung angeschlossen werden. Von der neuen Sondenelektronik werden die Analogsignale der Induktoren in dem Sondenrohr direkt in digitale Messwerte gewandelt und in digitaler Form weiter geleitet. Damit ist zwischen der Magnetometersonde und der Anzeige- bzw. Auswerteelektronik, beispielsweise einem Laptop oder einem PDA eine große Distanz möglich, ohne dass die Messergebnisse verfälscht werden. Wird gleichzeitig mit den digitalen Messwerten das analoge Messsignal von der Sondenelektronik weitergeleitet, so können weitere Anwendungsarten für die erfindungsgemäße Magnetometersonde oder ein Magnetometer mit einer solchen Sonde, abgedeckt werden.

Bevorzugt wird eine Ausführungsform, bei der die Sondenelektronik einen Mikrocontroller zur Steuerung der Digitalisierung des Analogsignals und/oder der Übertragung des Digitalsignals aufweist. Der Mikrocontroller kann auch die Ansteuerung der Induktoren übernehmen. Dabei kann der Mikrocontroller mit einem externen Analog-Digital-Wandlerbaustein und/oder einem externen Kommunikationsbaustein bzw. Treiberbaustein verbunden sein oder entsprechende Bausteine enthalten.

Das Digitalsignal kann von der Sondenelektronik kabelgebunden oder kabellos übertragen werden. Bei der kabelgebundenen Übertragung kann die Kabelverbindung elektrische Datenleitungen oder Lichtleitfasern aufweisen, über die die digitalisierten Messwerte zwischen seriellen oder parallelen Schnittstellen übertragen werden. In der Kabelverbindung können außerdem noch elektrische Verbindungsleitungen zur gleichzeitigen Übertragung des Analogsignals vorgesehen sein.

In einer Ausführungsform der Erfindung erfolgt die Datenübertragung zwischen der Magnetometersonde und der entfernten Anzeige- und/oder Auswerteeinheit kabellos, vorzugsweise in serieller Form mittels Funkwellen. Dazu wird eine Sondenelektronik vorgeschlagen, die eine Funkschnittstelle aufweist. Die Funkschnittstelle kann dem Bluetooth- oder dem WLan-Standard genügen, wobei auch andere, insbesondere auch zukünftige Standards nicht ausgeschlossen sind.

In einer vorteilhaften Ausführungsform weist die Sondenelektronik ein Modul zur Ortsdatenbestimmung, beispielsweise ein Satelliten-Navigationssystem auf und eine Einrichtung zum Weiterleiten der Ortsdaten in digitaler Form. Die Ortsdaten werden dabei dem Digitalsignal zeitlich zugeordnet übertragen. In Verbindung mit einer elektronischen Datenverarbeitung können so mittels den digitalisierten Messwerten des Analogsignals und den zugeordneten Ortsdaten Kartierungen vorgenommen werden.

Bevorzugt wird eine Ausführungsform, bei der das Sondenrohr eine autonome Spannungsquelle für die elektrische Versorgung der Induktoren und der Sondenelektronik aufweist. Als Spannungsquelle kann beispielsweise eine nicht aufladbare Batterie oder ein aufladbarer Akkumulator vorgesehen sein, die vorzugsweise schnell und einfach austauschbar sind. Damit kann die Magnetometersonde autark betrieben werden, vorzugsweise dann, wenn eine kabellose Übertragung der Messergebnisse von der Magnetometersonde zu einem abgesetzten Steuer-, Auswerte- oder Speichergerät vorgenommen wird.

Ein erfindungsgemäßes Magnetometer mit einer Magnetometersonde der vorstehend beschriebenen Art ist durch die Netzwerkfähigkeit auch für spezielle Aufgaben einsetzbar. Dabei können verschiedene andere Sensoren, beispielsweise ein elektronischer Kompass und/oder ein Neigungssensor und/oder ein Beschleunigungssensor mit den Induktoren des Magnetometers kombiniert werden. Die anderen Sensoren können an dem Sonderrohr innen oder außen oder abgesetzt vom Sondenrohr vorgesehen sein. Die erfindungsgemäße Magnetometersonde ist auch zum Aufbau von Mehrsondensystemen einfacher einsetzbar. Mehrere Magnetometersonden leiten dabei das Digitalsignal jeweils an ein gemeinsames Steuer-, Auswerte- oder Speichergerät. Dabei können die Digitalsignale über getrennte Verbindungsleitungen, über eine gemeinsame Busleitung oder getrennt voneinander kabellos übertragen werden.

Nachfolgend wird die Erfindung anhand von zwei in der Zeichnung schematisch dargestellten Ausführungsbeispielen näher erläutert. Weitere Merkmale der Erfindung ergeben sich aus der folgenden Beschreibung der Ausführungsbeispiele in Verbindung mit den Ansprüchen. Es zeigen:
- Figur 1: ein Blockschaltbild einer ersten erfindungsgemäßen Magnetometersonde, mit einem Mikrocontroller zur Steuerung eines externen Analog/Digital-Wandlers und einer Datenschnittstelle.
- Figur 2: ein Blockschaltbild einer zweiten erfindungsgemäßen Magnetometersonde mit einem Microcontroller mit integriertem Analog/Digital-Wandler zur Steuerung einer Datenschnittstelle und der Induktoren und zur Umwandlung des Messsignals.

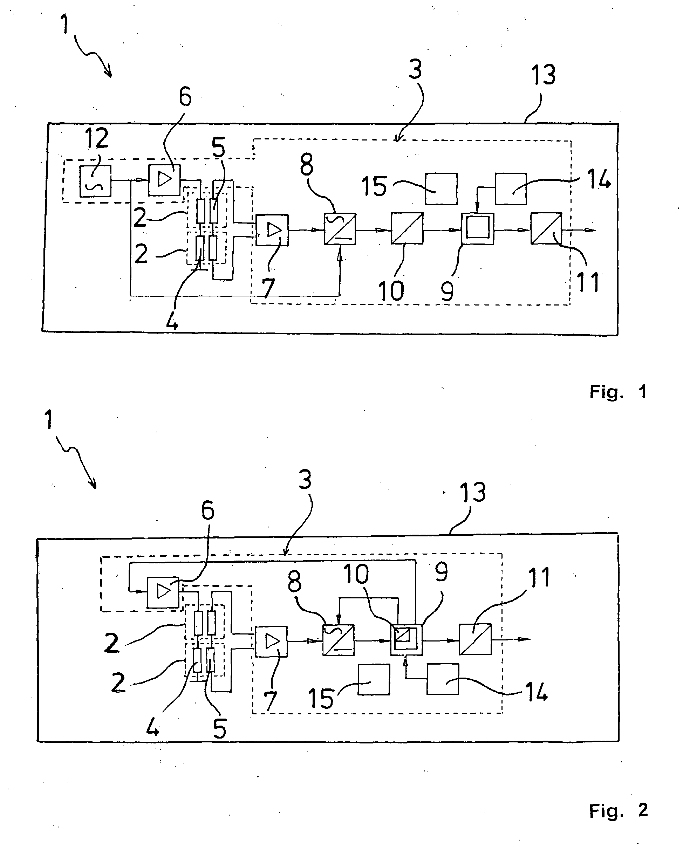

Die Figuren 1, 2 zeigen die erfindungsgemäßen Differenzmagnetometersonden 1 in einem Blockschaltbild. Die Magnetometersonden 1 weisen jeweils zwei Induktoren 2 und eine Sondenelektronik 3 auf. Die Sondenelektronik 3 steuert die Induktoren 2 und verstärkt ein Messsignal der Induktoren 2. Die Induktoren 2 weisen je eine Erregerspule 4 und eine Empfängerspule 5 auf, wobei die entsprechenden Spulen 4, 5 der beiden Induktoren 2 elektrisch in Reihe geschaltet sind. Eine steuerbare Stromquelle 6 in Form eines Verstärkers versorgt die Erregerspulen 4 mit einem alternierenden Strom. Die Empfängerspulen 5 liefern ein analoges Differenzsignal, das abhängig von der Homogenität eines einwirkenden Magnetfeldes ist und einem Differenzverstärker 7 zugeführt wird. Das verstärkte analoge Messsignal wird an einen zeitlich getakteten Umformer 8 weitergeleitet, dessen Ausgangssignal in periodischen Zeitabständen in digitale Messwerte umgewandelt wird.

Die Umwandlung erfolgt bei dem in der Figur 1 dargestellten ersten Ausführungsbeispiel durch einen von einem Mikrocontroller 9 getrennten Analog/Digital-Wandler 10, und in dem in der Figur 2 dargestellten zweiten Ausführungsbeispiels durch einen in dem Mikrocontroller 9 vorgesehenen Analog/Digital-Wandler 10. Der Mikrocontroller 9 steuert in beiden Ausführungsbeispielen eine digitale Schnittstelle 11, die die digitalisierten Messergebnisse zu einer in der Zeichnung nicht dargestellten entfernten Auswerteelektronik weiterleitet. Der Mikrocontroller 9 steuert in dem zweiten Ausführungsbeispiel außerdem noch den Umformer 8 sowie die Stromquelle 6, während in dem ersten Ausführungsbeispiel ein spezieller Schwingungsgenerator 12 den Umformer 8 und die Stromquelle 6 steuert.

Die Induktoren 2 und die Sondenelektronik 3 sind in einem schematisch dargestellten Sondenrohr 13 angeordnet, in dem auch ein Modul 14 zur Ortsdatenbestimmung, vorzugsweise ein satellitengestützter Navigationssensor und eine Spannungsquelle 15 integriert sein können. Das Moduls 14 ist mit dem Mikrocontroller 9 verbunden. Verbindungen der Spannungsquelle 15 zu der Sondenelektronik 3 und zu den Induktoren 2 sind in der Zeichnung nicht dargestellt.

## Patentansprüche

1. Magnetometersonde (1), mit einem Sondenrohr (13), in dem ein oder mehrere Induktoren (2) zusammen mit einer Sondenelektronik (3) angeordnet sind, wobei die Sondenelektronik (3) die Induktoren (2) ansteuert und ein veränderliches kontinuierliches elektrisches Analogsignal der Induktoren (2) verstärkt, **dadurch gekennzeichnet, dass** die Sondenelektronik (3) ein kontinuierliches Digitalsignal aus dem Analogsignal formt, das aus einer Folge von digitalisierten Messwerten besteht, und das Digitalsignal über einen digitalen Kommunikations- oder Treiberbaustein (11) an eine entfernte Auswerte- und/oder Anzeigeeinheit überträgt.

2. Magnetometersonde nach Anspruch 1, **dadurch gekennzeichnet, dass** die Sondenelektronik (3) einen Mikrocontroller (9) zur Ansteuerung der Induktoren (2) und/oder zur Steuerung der Digitalisierung des Analogsignals und/oder der Übertragung des Digitalsignals aufweist.

3. Magnetometersonde nach Anspruch 1 oder 2, **dadurch gekennzeichnet, dass** die Datenübertragung zwischen der Magnetometersonde (1) und der entfernten Anzeige- und/oder Auswerteeinheit kabellos, vorzugsweise in serieller Form mittels Funkwellen erfolgt.

4. Magnetometersonde nach einem der vorangegangenen Ansprüche, **dadurch gekennzeichnet, dass** die Sondenelektronik (3) ein Modul (14) zur Ortsdatenbestimmung aufweist und die Ortsdaten, dem Digitalsignal zeitlich zugeordnet, digital zu der Auswerteeinheit überträgt.

5. Magnetometersonde nach einem der vorangegangenen Ansprüche, **dadurch gekennzeichnet, dass** das Sondenrohr (13) eine autonome Spannungsquelle (15) für die Versorgung der Induktoren (2) und der Sondenelektronik (3) aufweist.

6. Magnetometer, **gekennzeichnet durch** eine Magnetometersonde (1) gemäß einem der vorangegangenen Ansprüche 1 bis 5.

7. Magnetometer, **gekennzeichnet durch** eine Gruppe von Magnetometersonden (1) gemäß einem der vorangegangenen Ansprüche 1 bis 5, die mit einer gemeinsamen Anzeige- und/oder Auswerteeinheit gekoppelt sind.
